Europäisches Patentamt

(19) European Patent Office

Office européen des brevets

(11) Publication number : **0 434 889 B1**

(12) **EUROPEAN PATENT SPECIFICATION**

(45) Date of publication of patent specification :
12.07.95 Bulletin 95/28

(51) Int. Cl.⁶ : **H02M 7/797, H02M 3/335**

(21) Application number : **90107105.0**

(22) Date of filing : **12.04.90**

(54) Inverter and power supply systems including same.

(30) Priority : **26.12.89 IL 92885**

(43) Date of publication of application :
**03.07.91 Bulletin 91/27**

(45) Publication of the grant of the patent :
**12.07.95 Bulletin 95/28**

(84) Designated Contracting States :
**AT BE CH DE DK ES FR GB GR IT LI NL SE**

(56) References cited :
DE-A- 2 728 377
KONTAKT & STUDIUM, vol. 33, 1982,
Grafenau/Württ., page 32 ; W. Hetterscheid :
"Schaltnetzteile"
PCI Proceedings, October 1985, pp. 84-98 ;
Sayed-Amr El-Hamamsy et al. : "A new family
of single-phase and three-phase inverters"

(73) Proprietor : **SYSTEL DEVELOPMENT AND
INDUSTRIES LTD.
Chen Boulevard 57
Rehovot (IL)**

(72) Inventor : **Rubin, Daniel
5 Hataishim Street
Nes Ziona (IL)**
Inventor : **Mogilner, Rafael
5 Hakalanit Street
Rehovot (IL)**
Inventor : **Dobrenko, Dimitri
30 Borojov Street
Raanana (IL)**

(74) Representative : **Modiano, Guido, Dr.-Ing. et al
Baaderstrasse 3
D-80469 München (DE)**

EP 0 434 889 B1

## Description

## BACKGROUND OF THE INVENTION

The present invention relates to an inverter for supplying electrical energy from a DC supply to a load. The invention may also be advantageously used in uninterrupted power supplies and standby power supplies, and is therefore described below also with respect to these applications.

Many forms of inverter circuits are known for converting DC to AC. One known circuit, called the "flyback" type, and described for example in the article "A New Family of Single-Phase and Three-Phase Inverters" by Sayed-Amr El-Hamamsy and R.D. Middlebrook, PCI, October 1985 Proceedings, Pages 84-98, includes a transformer having a primary winding coupled to the DC supply and a switch for interrupting the DC supply, causing energy to be stored in the transformer, which energy is outputted from the secondary winding.

DE-A-2728377 (which corresponds to US 4,213,173) describes an inverter for supplying electrical energy from a DC supply to a load, comprising: a transformer including a primary winding circuit coupled to the DC supply, and a secondary winding circuit coupled to the load; the primary winding circuit including a first switch for interrupting the DC supply causing energy to be stored in the transformer; the secondary winding circuit including at least a second, unidirectional switch to produce an output of one sign when closed; the primary winding circuit further including an electrical device effective to return energy to the DC supply when said first and second switches are open; and a control circuit for controlling the operation of the first and second switches;

An object of the present invention is to provide an inverter having a number of advantages over the above systems, as will be described more particularly below.

Other objects of the invention are to provide an uninterrupted power supply and also a standby power supply utilizing the novel inverter.

## BRIEF SUMMARY OF THE INVENTION

According to the present invention, there is provided an inverter of the foregoing type characterized in that said control circuit separately and independently controls the operation of said first and second switches to open and close, at the same frequency, such that during one interval in each cycle the switch in the primary winding circuit is closed to produce a controlled amount of an excess of energy which is stored in said transformer, during a second interval the switch in the secondary winding is closed to delivery energy to the load, and during a third interval in each cycle the switches in the primary winding circuit and the secondary winding circuit are both open and the excess energy stored in the transformer is returned to the DC supply, thereby permitting fast and stable control.

According to another important feature in the preferred embodiments of the invention described below, the control circuit includes: means for closing the first switch and opening the second or third switch to start a first Interval in each cycle during which energy is stored in the transformer; means operative at the end of the first Interval to open the first switch and to close the active second or third switch to start a second Interval in each cycle during which energy stored in the transformer is delivered to the load or, in the case of a reactive load, energy in the load is stored in the transformer; and means operative at the end of the second Interval to open all the switches to start a third Interval during which excess energy then stored in the transformer may be returned to the DC supply via the primary winding circuit.

As will be described more particularly below, such an inverter is capable of four-quadrant operation, wherein energy is supplied to the load during the first and third quadrants, and excess energy stored in the transformer or in the load may be returned to the DC supply for recharging it during the second and fourth quadrants. Besides permitting four-quadrant operation, the inverter of the present invention also permits fast and stable control.

The four-quadrant operation of the inverter provides particular advantages when used in an uninterrupted power supply and also in a standby power supply. Thus, it obviates the need for the provision of large separate chargers normally required in such systems in order to keep the back-up power supply fully charged. The invention is therefore described below also with respect to these applications.

Another preferred embodiment of the invention is also disclosed involving a different sequence of control. According to this embodiment, the primary winding control subcircuit opens the first switch at the beginning of each cycle and closes the first switch at a subsequent point in the cycle when, at the end of the respective cycle, the energy stored in the transformer would reach a predetermined value; and the secondary winding control subcircuit closes the second switch at the beginning of the respective cycle and opens the second switch when the voltage at the output of the secondary winding circuit reaches a predetermined value; such that a first interval is started by the opening of the first switch and closing of the second switch, during which energy in the transformer is delivered to the load; a second interval is started by the opening of the second switch during which excess energy in the transformer is returned to the power supply; and a third interval is started by the closing of the first switch during which energy is stored in the transformer.

It will thus be seen that in the first-described embodiment, the interval (therein Interval III) during which excess energy is delivered to the power supply is of fixed termination point; whereas in the latter embodiment this interval (Interval II), is of "floating" duration. That is, Interval II in the latter embodiment starts by the opening of the secondary winding switch (the "second swtich"), when the voltage at the output of the secondary winding circuit reaches a predetermined value, and ends by the closing of the primary winding switch (the "first switch") at the point in the cycle when, at the end of the cycle, the energy stored in the transformer would reach a predetermined value. Such a "floating" arrangement for determining the interval during which excess energy stored in the transformer is delivered to the power supply, produces a more efficient and stable operation.

Further features and advantages of the invention will be apparent from the description below.

## BRIEF DESCRIPTION OF THE DRAWINGS

The invention is herein described, by way of example only, with reference to the accompanying drawings, wherein:

Fig. 1 is a block diagram illustrating the main components of an inverter constructed in accordance with the present invention;

Fig. 2 is a diagram more particularly illustrating the components of the inverter in the system of Fig. 1;

Fig. 2a illustrates a variation in the primary winding circuit of the inverter of Fig. 2;

Fig. 3 is a magnetic flux diagram helpful in explaining the operation of the inverter of the present invention;

Fig. 4 is a block diagram illustrating the main components of the control unit in the inverter of Figs. 1, 2 and 2a;

Fig. 5 is a block diagram illustrating the primary winding control circuit in the block diagram of Fig. 4;

Fig. 6 is a block diagram illustrating the main components of the secondary winding control circuit in the control unit of Fig. 4;

Fig. 7 is a block diagram particularly illustrating the construction of the flux level reference generator in the control unit of Fig. 4;

Fig. 8a illustrates another variation in the primary winding circuit of the transformer in the inverter of Figs. 1-4, and Figs. 8b and 8c illustrate variations in the secondary winding circuit of the transformer in the inverter of Figs. 1-4;

Fig. 9 is a block diagram illustrating one form of uninterrupted power supply including the novel inverter of the present invention;

Fig. 10 illustrates another form of uninterrupted power supply including the novel inverter of the present invention;

Fig. 11 illustrates a power standby supply including the novel inverter of the present invention;

Fig. 12 is a magnetic flux diagram showing a modified sequence of control in the described embodiment;

Fig. 13 is a block diagram illustrating the primary winding control subcircuit in the described embodiment;

Fig. 14 illustrates one form of magnetic flux-measuring circuit that may be used in the subcircuit of Fig. 13; and

Fig. 15 illustrates one form of flux-demand estimator circuit that may be used in the magnetic flux-measuring circuit of Fig. 14, as well as in the circuit Figs. 1-11.

## DESCRIPTION OF PREFERRED EMBODIMENTS

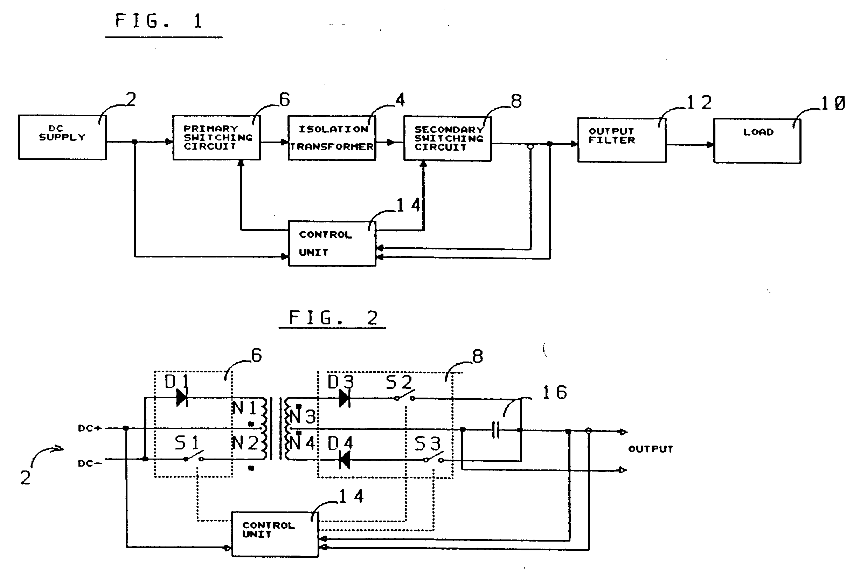

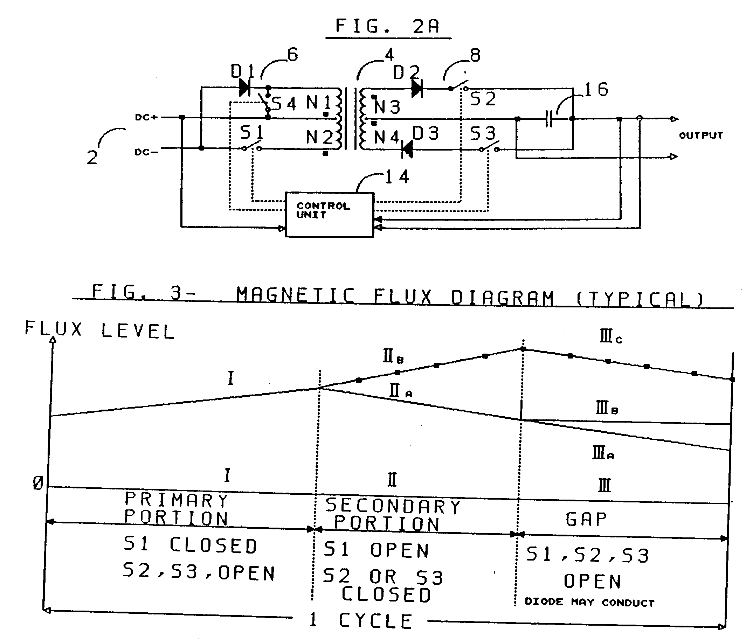

### Basic Construction of the Inverter (Figs. 1 and 2)

Fig. 1 is a block diagram illustrating the main components of an inverter constructed in accordance with the present invention, and Fig. 2 more particularly illustrates those components.

Thus, the inverter comprises a DC battery supply 2, feeding power to a transformer 4 via a primary winding switching circuit 6. The secondary winding of transformer 4 is controlled by a secondary winding switching circuit 8 so as to output the power to a load 10 via an output filter 12. A control unit 14 receives inputs from the input to the primary winding circuit of the transformer 4, and also from the output of the transformer secondary winding circuit to the load 10, and controls the primary winding switching circuit 6 and the secondary winding switching circuit 8 in response to such inputs.

Fig. 2 more particularly illustrates the main components of the inverter of Fig. 1. Thus, as shown in Fig. 2, transformer 4 includes two primary windings $N_1$, $N_2$ connected to the DC supply 2, and two secondary windings $N_3$, $N_4$ for supplying power to the load 10 via filter 12, and also via an output capacitor 16 connected to the output circuit of the transformer secondary windings. The load 10 may be a reactive load, so that it receives energy from the inverter during the first and third quadrants, and gives energy back to the inverter during the second and fourth quadrants.

The primary winding switching circuit shown by block 6 in Fig. 1 includes a switch $S_1$ between the DC supply and primary winding $N_2$, which switch is interrupted under the control of the control unit 14 for causing energy to be stored in the transformer. The primary winding switching circuit further includes a unidirectional conducting device or diode $D_1$, in series with the power supply and primary winding $N_1$. Diode $D_1$ is effective to deliver energy back to the DC supply 2 during the second and fourth-quadrants as will be described more particularly below.

The secondary switching circuit indicated by block 8 in Fig. 2 includes two further switches $S_2$, $S_3$ poled in opposite directions by their respective unidirectional conducting devices $D_3$, $D_4$. One of these two switches would be active during each cycle of operation, depending on the sign of the output supplied by the inverter to the load. Thus, if switch $S_3$ is the active one, switch $S_2$ would be continuously open, and switch $S_3$ would be closed during precise Intervals of each cycle to output pulses on one sign; whereas if switch $S_2$ is the active one, switch $S_3$ would be continuously open and switch $S_2$ would be closed at precise Intervals to output pulses of the opposite sign.

Switches $S_1$, $S_2$, $S_3$ are controlled by control unit 14 in such a manner as to achieve four-quadrant operation with fast control. The four-quadrant operation is permitted by the addition of the above-mentioned diode $D_1$ in the primary winding circuit, such that diode $D_1$ provides a path for charging the battery supply 2 at a certain Interval during each cycle in which the energy, stored in the transformer and not used in the load, is returned to the battery supply for charging it.

Magnetic Flux Diagram (Fig. 3)

The manner in which the above-described four-quadrant operation is accomplished will be better understood by reference to the magnetic flux diagram illustrated in Fig. 3, which shows what occurs during each cycle. Thus, each cycle is divided into three Intervals I, II, III, as follows:

Interval I is an energy storing or accumulation Interval, in which energy is stored in the transformer. This Interval is started by closing switch $S_1$ at the beginning of a cycle when switches $S_2$ and $S_3$ are both open, so that current in the primary winding $N_2$ starts to build up according to the following equation:

$$I_p = I_{op} + (V_{dc}.t)/L_p$$

wherein: $I_p$ is the instantaneous current in the primary winding $N_2$; $I_{op}$ is the starting current; $V_{dc}$ is the battery voltage; and $L_p$ is the inductance of primary winding $N_2$.

Interval II is normally an energy-delivering Interval and is started by the opening of switch $S_1$ and the closing of the active switch $S_2$ or $S_3$, depending on the sign of the output current. During Quadrants 1 and 3 of this Interval, the energy stored in the transformer is used for charging the capacitor 16 (Fig. 2) for delivery to the load (10, Fig. 1) via the secondary winding $N_3$ or $N_4$, depending on whether switch $S_2$ or $S_3$ is the active one and is closed. During Quadrants 1 and 3 of Interval II, the current in the secondary winding decreases with time, as shown by descending line IIa, as follows:

$$I_s = I_{os} - (V_{out}.t)/L_s$$

wherein: $I_s$ is the instantaneous current in the secondary winding; $I_{os}$ is $I_{op}(N_p/N_s)$.

On the other hand, if the load is a reactive load, energy from the load is stored during Quadrants 2 and 4 in the transformer. Thus, the energy from the load is stored in the transformer, as shown by ascending line IIB, according to the following equation:

$$I_s = I_{os} - ( - \underline{V_{out}}.t)/L_s$$

Interval III starts by closing the active switch $S_2$ or $S_3$, whichever one had been closed in Interval II according to the sign of the output, switch $S_1$ in the primary winding circuit remaining open. Accordingly, all the switches are open. During this Interval, the excess of energy not delivered to the load may return to the DC supply 2 via diode $D_1$ and primary winding $N_1$, the current through the latter winding decreasing as follows:

$$I_d = I_{od} - (V_{dc}.t)/L_p$$

wherein: $I_d$ is the instantaneous current through diode $D_1$ and winding $N_1$ to the battery supply 2; $I_{od}$ is the starting current through winding $N_1$; and $L_p$ is the inductance of the primary winding $N_1$.

With respect to Interval III, descending line IIIa in Fig. 3 thus describes the excess energy returned to the power supply, via the diode $D_1$ and primary winding $N_1$, during Quadrants 2 and 4, whereas descending line IIIc describes the excess energy returned to the power supply during Quadrants 2 and 4 in a reactive load.

In some cases, however, there may be no need to return energy back to the DC power supply. In such a case the energy may merely be retained within the transformer, as shown by horizontal line IIIb in Fig. 3. Fig. 2a illustrates an arrangement of the primary winding circuit that may be used for effecting the operation illustrated by the horizontal line IIIb in Fig. 3.

Thus, the primary winding circuit shown in Fig. 2a also includes primary winding $N_1$ containing diode $D_1$ and primary winding $N_2$ containing switch $S_1$, as in Fig. 2. However, it includes an additional switch $S_4$ which is closed at the beginning of Interval III (Fig. 3) in order to short circuit winding $N_1$, and thereby to preserve in the transformer the excess energy not delivered to the load during Interval II.

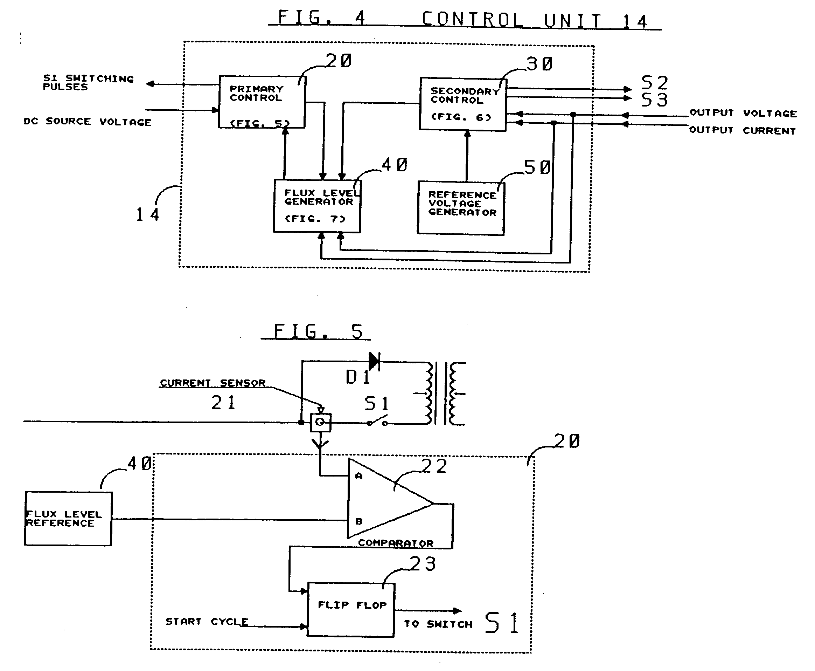

Control Circuit 14 (Figs. 4-7)

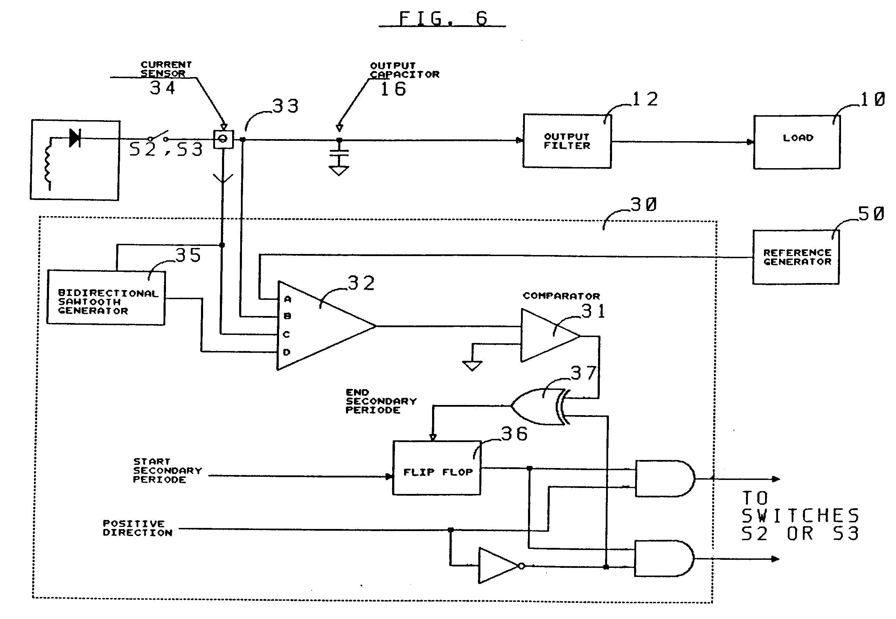

Fig. 4 illustrates the control circuit 14 which is used for controlling the switches $S_1$, $S_2$ and $S_3$ in the primary and secondary winding circuits illustrated in Fig. 2, and also switch $S_4$ in the modification to the primary winding circuit illustrated in Fig. 2a if that modification is used. Figs. 5-7 illustrate more particulars of the various components used in control circuit 14.

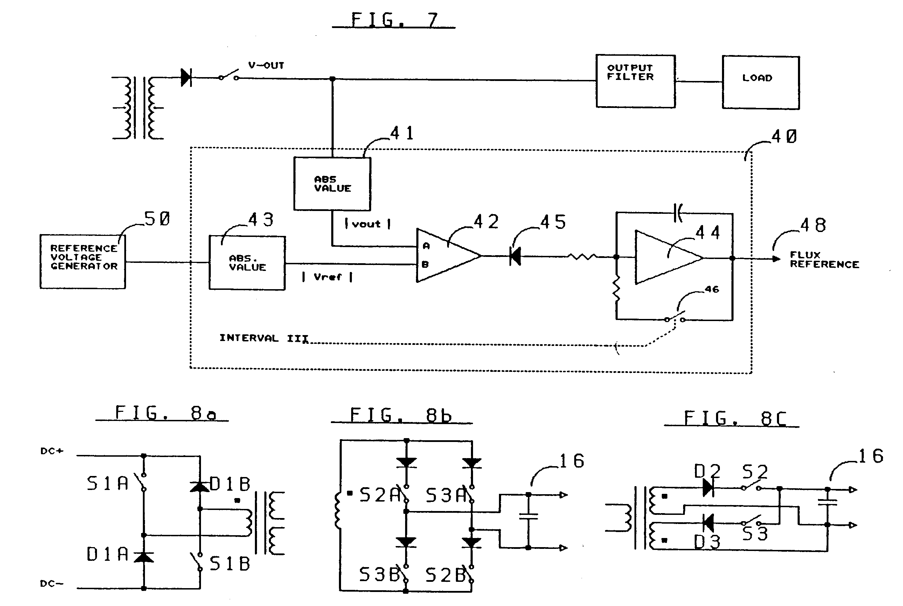

Briefly, control circuit 14 includes a primary winding control subcircuit 20 (more particularly illustrated in Fig. 5) which controls switch $S_1$ in the primary winding circuit; a secondary winding control subcircuit 30 (more particularly illustrated in Fig. 6) which controls

switches $S_2$ and $S_3$; a flux level reference generator 40 (more particularly illustrated in Fig. 7); and a reference voltage generator 50, which controls the secondary winding control subcircuit 30. The primary winding control subcircuit 20 is effective to sense the energy stored in the transformer and to open switch $S_1$ when the stored energy reaches a predetermined value as fixed by the flux level reference generator 40; and the secondary winding control subcircuit 30 is effective to sense the output voltage in the secondary winding circuit of the transformer and to open the active switch $S_2$ or $S_3$ (depending on the polarity of the output) when the output voltage reaches a predetermined value as fixed by the reference voltage generator 50.

Fig. 5 more particularly illustrates the primary winding control subcircuit 20. It includes a current sensor 21 for sensing the current through switch $S_1$ in the primary winding circuit, and a comparator 22 which receives the latter sensed current. Comparator 22 also receives a signal from the flux level reference generator 40 which, as described above, fixes the predetermined value to be reached by the stored energy when switch $S_1$ is to be opened to end the energy-storing Interval I and to start the energy-delivering Interval II. Comparator 22 compares the sensed current from sensor 21, and the predetermined value fixed by the flux level reference generator 40, and actuates a flip-flop 23 to open switch $S_1$ when the two values are equal. Thus, flip-flop 23 is set at the start of each cycle when switch $S_1$ is closed, and is reset by the output from comparator 22, when the two values sensed by the comparator are equal, to open switch $S_1$.

Fig. 6 illustrates the secondary winding control subcircuit represented by box 30 and also by the reference voltage generator 50 in Fig. 4. As briefly described above, this secondary winding controlled subcircuit senses the output voltage in the secondary winding circuit of the transformer, and when the output voltage reaches a predetermined value as fixed by the reference voltage generator 50, opens the active secondary-winding, switch $S_2$, $S_3$ (depending on the polarity of the output voltage), to thereby end the energy-delivering Interval II and to start Interval III during the which the excess energy is delivered back to the DC supply via diode $D_1$ and primary winding $N_1$ (Fig. 2).

The secondary winding control subcircuit illustrated in Fig. 6 includes a comparator 31 connected to a summing amplifier 32 which receives a first input A from the reference voltage generator 50, and a second input B from the output side 33 of the active secondary-winding switch, $S_2$ or $S_3$, so as to sense the output voltage of the inverter.

In order to improve both the stability of the inverter and its tracking capabilities, summing amplifier 32 connected to comparator 31 includes two further inputs, namely: a third input C from a correction offset signal generator 34, which senses the output current and generates a correction offset signal proportional thereto; and a fourth input D from a bidirectional sawtooth generator 35, which generates a signal whose magnitude and sign are a function of the output current. Accordingly, the summing amplifier 32 will produce, from all the foregoing inputs, an output signal $(\alpha A + \beta B + \gamma C + \delta D)$, which signal is applied to comparator 31.

Comparator 31 thus produces an output signal when the output voltage from the inverter reaches the predetermined value fixed by the reference voltage generator 50. This output signal is applied to a flip-flop 36, which is set at the beginning of the energy-delivering Interval II, and reset by the output from the comparator 31 at the end of the energy-delivering Interval II. Ending of Interval II starts the recharging Interval III during which the DC power supply 2 is recharged by the excess energy stored in the transformer during Interval I and not delivered to the load during Interval II.

The secondary winding control subcircuit 30 illustrated in Fig. 6 further includes an EXCLUSIVE-OR circuit 37 which operates as a gate to invert (or not invert) the comparator signal according to the quadrant of the output voltage. That is, if the output voltage is negative, it is inverted; and if positive, it is not inverted. Circuit 37 could be omitted if the values inputted into comparator 31, via its summing amplifier 32, are absolute values.

As explained earlier, the speed and the stability of the inverter control are achieved through the existence of an Interval (namely Interval III) during which diode $D_1$ is conducting. Interval III is actually the remainder of the cycle, after the completion of the energy-storing Interval I and the energy-delivering Interval II, during which all of the switches $S_1$, $S_2$ or $S_3$ are open. The flux reference generating circuit 40, which controls the primary winding control subcircuit 20 (Fig. 4), is used for this purpose.

The flux level reference generator 40, as illustrated in Fig. 7, includes a sensor 41 for sensing the absolute value of the output voltage, which is applied as a first input A into a differential amplifier 42 functioning as a subtractor circuit. Differential amplifier 42 includes a second input B from the reference voltage generator 50, converted to an absolute value by circuit 43. The latter circuit subtracts input B from input A, and thereby produces an output signal representing the difference between the required output voltage and the actual output voltage. This signal is fed to an integrator 44 via diode 45 which increases the flux level reference signal used for controlling the instant of opening of switch $S_1$ to terminate the energy-storing Interval I.

On the other hand, this latter reference signal is decreased according to an exponential decay during Interval III during when all of the switches $S_1$, $S_2$ or $S_3$ are open. The flux reference signal outputted from integrator 44 is coupled to its input via switch 46 which is closed during Interval III by the control circuit 14.

It will thus be seen that when the energy outputted from the inverter is too low, the absolute value of input A will be smaller than that of input B during the energy-storing Interval I; accordingly, the voltage at the output of the voltage amplifier 42 will be negative, thereby supplying a negative input to the integrator 44. When the input to the integrator is negative, its output increases positively. This increases the output of the flux reference signal which closes switch $S_1$ in the primary winding circuit for a longer period of time, thereby accumulating more energy in the energy-storing Interval I. The above arrangement thus corrects the inverter circuit when the output voltage is too low because the energy stored in the transformer is too low.

However, when the energy stored in the transformer is too high, the output voltage of the inverter circuit will not be affected because that is controlled by the comparator. However, Interval III becomes too long because the output capacitor 16 (Fig. 2) charges at a faster rate when the energy being delivered is too high. The output of the integrator 44 is always connected to its input during Interval III, producing an exponential decay. Therefore, if Interval III becomes too long, the exponential decay significantly reduces the flux level reference signal outputted at 48 to control the transformer primary winding switch $S_1$.

## Variations in the Primary and Seconding Winding Circuits (Figs. 2a, 8a-8c

Fig. 2a described above illustrates a variation that may be made in the transformer primary winding circuit when it is not necessary to use the excess energy in Interval III for recharging the power supply. Fig. 8a illustrates another variation that may be used in the transformer primary winding circuit; and Figs. 8b and 8c illustrate variations that may be made in the transformer secondary winding circuit.

Thus, Fig. 8a illustrates the use of two diodes $D_{1a}$, $D_{1b}$ and the two switches $S_{1a}$, $S_{1b}$ in the transformer primary winding circuit, instead of a single diode $D_1$ and a single switch $S_1$. During the normal operation, both switches $S_{1a}$, $S_{1b}$ would be opened and closed together. However, if it is desired to short-circuit a winding in the primary winding circuit, as described above with respect to Fig. 2a in order to save the excess energy in the transformer and not to use it for recharging power supply, one of the switches (e.g., $S_{1b}$) may be used as switch $S_4$ in Fig. 2a for this purpose.

Fig. 8b illustrates a variation that may be made in the transformer secondary winding circuit, wherein, instead of using two unidirectional switches $S_2$, $D_2$ and $S_3$, $D_3$, the secondary winding circuit includes a bridge having four arms with a unidirectional switch in each of the four arms. Thus, two arms include the two switches $S_{2a}$, $S_{2b}$ and their diodes $D_{2a}$, $D_{2b}$, corresponding to switch $S_2$ and diode $D_2$ in Fig. 2; and the other two arms include switches $S_{3b}$, $S_{3b}$ and diodes $D_{3a}$, $D_{3b}$, corresponding to switch $S_3$ and diode $D_3$ in Fig. 2.

Fig. 8c illustrates a further variation in the secondary winding circuit including two unidirectional switches, comprising $S_2'$ and $D_2'$ in series with one secondary winding and $N_3'$, and switch $S_3'$ and diode $D_3'$ in series with the other secondary winding $N_4'$.

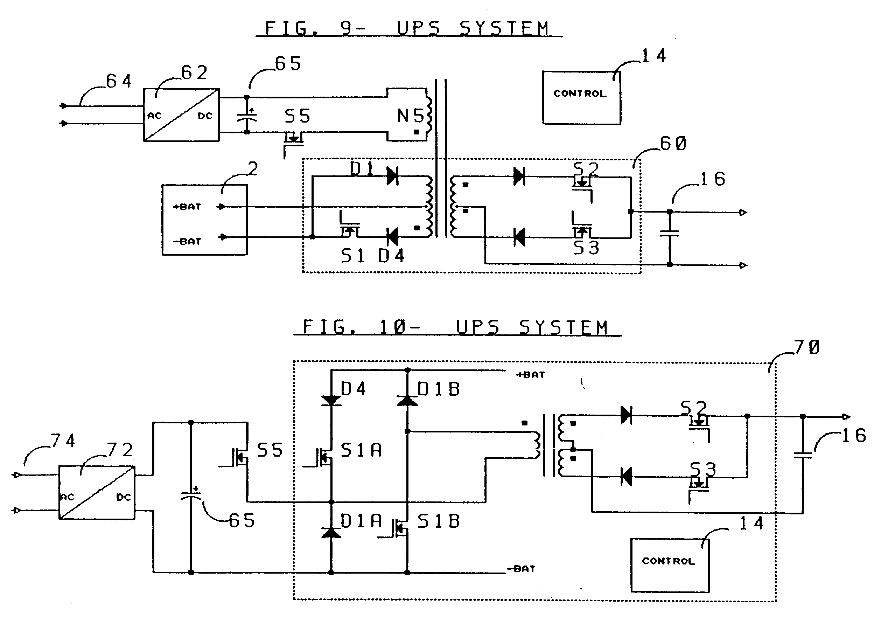

## Uninterruptable Power Supply (Figs. 9 and 10)

The above described inverter is particularly useful for uninterruptable power supplies, Thus, by merely adding a winding and a switch, the inverter obviates the need for a separate charger required in the conventional uninterruptable power supply. Figs. 9 and 10 illustrate two systems which may be used for this purpose.

The system illustrated in Fig. 9 is one wherein the input, output and battery are all voltaicly isolated from each other and from the line.

In Fig. 9, the inverter as described above, and as illustrated particularly in Fig. 2, is included within box 60, and the elements therein corresponding to those in Fig. 2 are identified by the same reference characters to facilitate understanding. To enable the inverter 60 to be used as an uninterruptable power supply it is only necessary to add a further switch $S_5$, and a further coil $N_5$ in the primary winding circuit of the transformer in the inverter and series-connected to the rectifier 62 of the power supply mains 64.

During normal operation of the circuit, the power is supplied from the power supply mains 64, rectifier 62, and reservoir capacitor 65, to the load via the output capacitor 16. During this operation, switch $S_5$ is controlled, instead of switch $S_1$. That is, switch $S_5$ is closed at the beginning of the cycle in order to start the energy- storing Interval I, and is opened to terminate that Interval and to start Interval II. During this normal operation, the active secondary winding switch $S_2$ or $S_3$ (according to the polarity of the output voltage desired) is controlled as described above, the active switch being closed to start Interval II, and being opened to end that Interval and to start Interval III, during which the excess energy not delivered to the load may used for recharging the DC power supply. During Interval III, the battery 2 of the inverter 60 may be recharged via diode $D_1$ in the same manner as described above with respect to Fig. 2.

Now, should there be an interruption in the supply mains 64, the battery supply 2 is now used for supplying the load in the same manner as described above with respect to Fig. 2.

Fig. 10 illustrates another arrangement wherein the inverter, therein designated 70, is used in an uninterruptable power supply. In the system illustrated in Fig. 10, the battery of the inverter is voltaicly coupled to the supply mains 74 via its rectifier 72, so that the battery is continuously and controllably charged by excess energy not delivered to the load and returned to the battery in Interval III as described above.

During the normal operation of the system, when the load is supplied from the supply mains 74 via rectifier 72, the additional switch $S_5$, corresponding to switch $S_5$ in Fig. 9, is controlled in the same manner as described above with respect to switch $S_1$; that is, it is closed at the start of each cycle and is opened at the end of the energy-storing Interval I. During this normal operation, the active seconardy-winding switch $S_2$ or $S_3$ in the secondary winding circuit is controlled in the same manner as described above with respect to Fig. 2, the active switch being closed at the start of Interval II and being reopened at the end of that Interval and at the start of Interval III when the excess energy may be returned to the battery.

However, when the mains supply 74 is interrupted, switches $S_{1a}$ and $S_{1b}$ are now used for controlling the transformer primary winding circuit, being closed at the start of the energy-storing Interval I and opened at the end of that Interval and the start Interval II, in the same manner as described above with respect to Fig. 2.

It will be noted that the primary winding circuit in the system illustrated in Fig. 2 is similar to that illustrated in Fig. 8a. It will be appreciated, however, that it could be of other constructions, such as that illustrated in Fig. 2 or 2a.

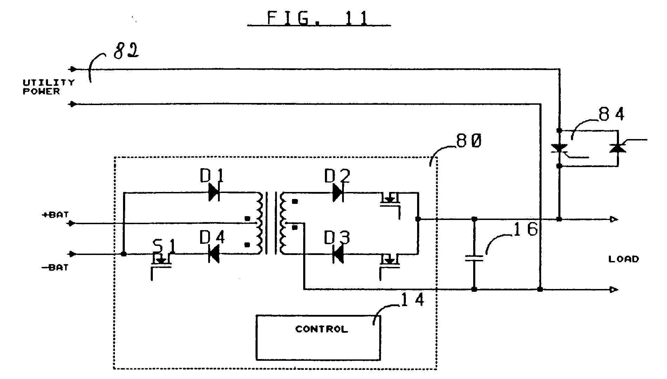

## Standby Power Supply (Fig. 11)

The four-quadrant operation of the illustrated inverter makes it particularly useful in a standby power supply. Fig. 11 illustrates one such arrangement wherein the inverter, indicated by the elements within block 80, is substantially of the same construction and operates in substantially the same manner as described above, and is connected to the load in parallel with the power supply mains 82.

In the configuration illustrated in Fig. 11, the inverter is connected in parallel with the power supply mains by a thyristor network 84 and operates at a somewhat lower voltage than the line voltage, so that the battery is charged during the operation of the system in a continuous manner in the second and fourth quadrants. However, whenever the power supply mains 82 fails to delivery the required line voltage, thyristor network 84 ceases to conduct, whereby the inverter circuit now supplies the power to the load and continues to do so until normal power is restored to the supply mains.

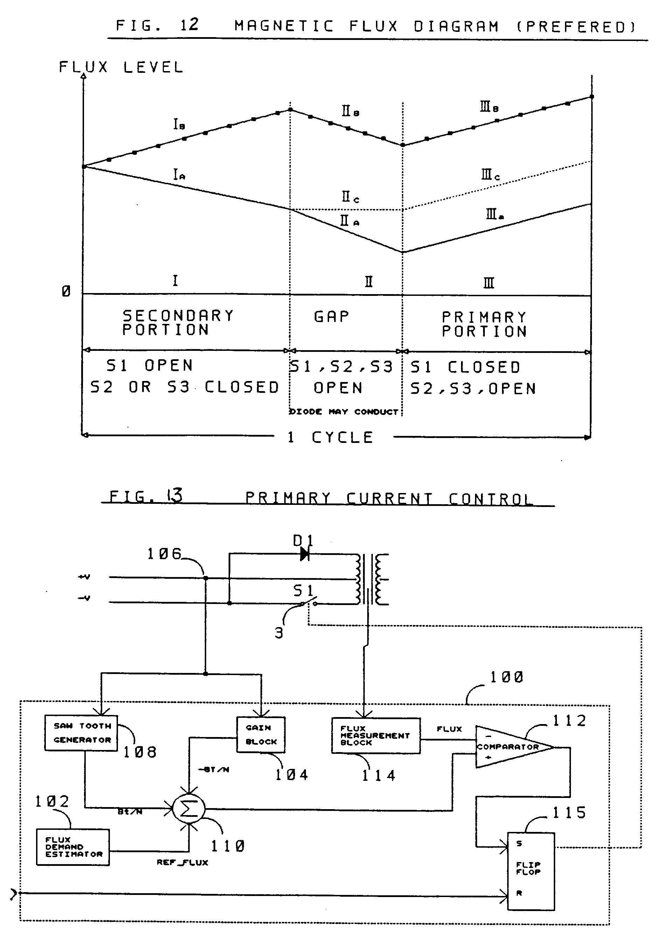

## Modified Sequence of Control (Fig. 12)

The magnetic flux diagram illustrated in Fig. 12 corresponds to the diagram illustrated in Fig. 3 except that, whereas in Fig. 3 the starting and termination points of the interval (therein Interval III) during which excess energy is delivered to the power supply are fixed in the cycle, in Fig. 12 this interval (therein designated Interval II) is not fixed for each cycle, but rather "floats". This requires the control sequence be changed so that the cycle in the embodiment of the present application begins with conduction in the secondary winding circuit, rather than in the primary winding circuit.

More particularly, in the control sequence illustrated in Fig. 12 , the primary winding control circuit opens switch $S_1$ at the beginning of each cycle and closes switch $S_1$ at a subsequent point in the cycle when, at the end of the cycle, the energy stored in the transformer would reach a predetermined value; and the secondary winding circuit control subcircuit closes switch $S_2$ at the beginning of the cycle, and opens switch $S_2$ when the voltage at the output of the secondary winding circuit reaches a predetermined value. Thus, as shown in Fig. 12, a first interval (Interval I) is started by the opening of switch $S_1$ and closing of the active secondary winding switch ($S_2$ or $S_3$) during which energy in the transformer is delivered to the load; a second interval (Interval II) is started by the opening of the active switch $S_2$ or $S_3$ during which excess energy in the transformer is returned to the power supply; and a third interval (Interval III) is started by the closing of switch $S_1$, during which energy is stored in the transformer. It will thus be seen that the excess energy delivered to the power supply occur during Interval II, which starts by the opening of switch $S_2$ when the voltage at the output of secondary winding which is a predetermined value; and this interval the by the closing of switch $S_1$ at that point in the cycle when, at the end of the cycle, the energy stored in the transformer would reach a predetermined value. The latter point is thus a "predicted" point, and circuitry is provided, as will be described more particularly below, for predicting that point ending Interval II.

Thus, as seen in the diagram of Fig. 12, since during Interval I energy stored in the transformer is delivered to the load, the magnetic flux in the transformer decreases, as indicated by the descending line Ia; but if the load is reactive, then energy in the load is transferred to the transformer, as indicated by the ascending line Ib.

Interval II, when the excess energy in the transformer is delivered to the power supply, is normally indicated by the descending line IIa or IIb, respectively. However, if the modification illustrated in Fig. 2a is used, including a switch which short circuits one of the coils, then the level of the energy in the transformer stays constant, as indicated by line IIc.

Interval III in Fig. 12, when the energy is stored in the transformer for delivery to the load, is indicated by the ascending line IIIa, IIIb or IIIc, respectively.

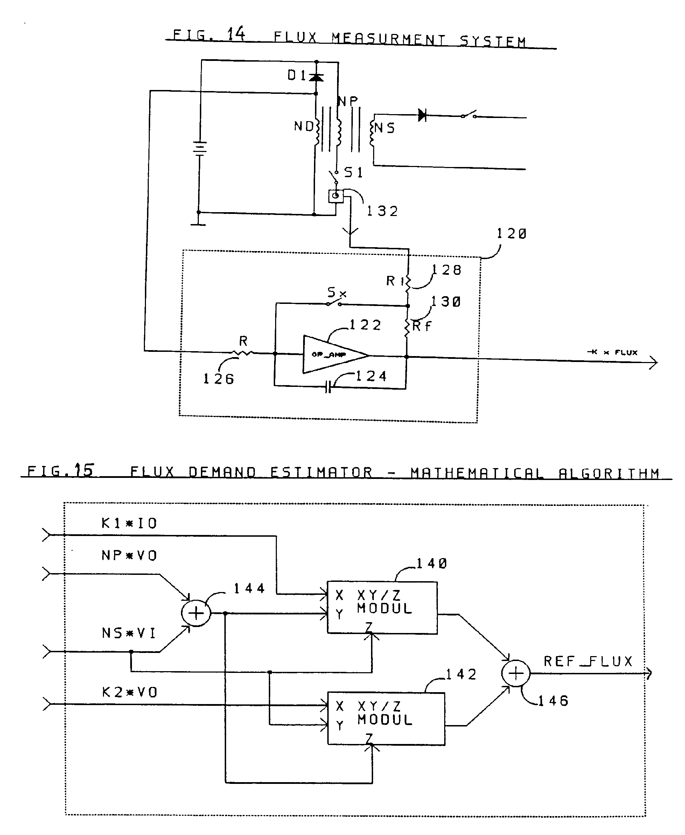

## Measurement of Transformer Magnetic Flux (Fig. 13)

Fig. 13 illustrates one form of primary winding control subcircuit, generally designated 100, that may be used for controlling switch $S_1$ in the primary winding circuit in accordance with the sequence illustrated by the diagram of Fig. 12. This circuit corresponds to circuit 20 in Fig. 5 , but is designed so that it opens switch $S_1$ at the beginning of each cycle and closes the switch at a subsequent point in the cycle when, at the end of the cycle, the energy stored in the transformer would reach a predetermined value. This value is predetermined during each cycle by a flux demand estimator, generally designated 102 included in the primary winding control subcircuit 100, which generates a voltage corresponding to the required flux to satisfy the load. Preferably, the generated voltage corresponds to a reference flux depending on the load, but may also correspond to a constant reference flux.

More particularly, circuit 100 in Fig. 13 includes a "gain block" unit 104, which may be an amplifier or attenuator changing scales, connected across the input voltage, as shown by connection 106, to generate a voltage corresponding to the input voltage; and a sawtooth generator 108 also connected to the input voltage connection 106 for generating a further voltage also depending on the input voltage but varying with time. The three voltages produced by units 102, 104 and 108 are inputted into a summing circuit 110 which adds the outputs of the flux-demand estimator 102 and the sawtooth generator 108, and subtracts the output from the gain block circuit 104, to output a voltage which is applied to one input of a comparator 112.

The other input of comparator 112 is from a magnetic flux-measuring circuit 114, which outputs a voltage corresponding to the flux in the transformer $T_r$. Comparator 112 controls a flip-flop 115, which in turn controls the switch $S_1$ in the primary winding of the transformer $T_r$

Flip-flop 115 is reset at the beginning of each cycle to open switch $S_1$, and thus to end the energy-storing Interval I (line Ia or Ib, Fig. 12) during which the active switch ($S_2$ or $S_3$) in the secondary winding circuit is closed, so that energy stored in the transformer is delivered to the load. Switch $S_1$ remains open during Interval II (line IIa, IIb, or IIc, Fig. 12) when excess energy is delivered to the power supply, but closes to end Interval II at the subsequent point in the cycle when, at the end of the cycle, the energy stored in the transformer would reach a predetermined value as determined by comparator 112, which controls flip-flop 115 to close switch $S_1$, as described above. The closing of switch $S_1$, end Interval II, starts Interval III, during which energy is stored in the transformer, this interval being ended by the end of the cycle, when switch $S_1$ is opened by the resetting of flip-flop 115.

It will thus be seen that circuit 100 illustrated in Fig. 13 operates to close switch $S_1$ according to the following approximation equation:

$$\text{FLX} = \text{REF - FLUX} - \frac{V_b\,T}{N_o} + \frac{V_b\,t}{N_p}$$

wherein:

FLX is the instantaneous flux in the transformer;

REF-FLUX is the flux to be established at the end of the cycle;

$V_b$ is the source voltage at the primary side;

$N_p$ is the number of turns of the primary winding;

T is the period of the cycle; and

t is the instantaneous time.

Thus, summing circuit 110 continuously adds the REF-FLUX from the flux-demand estimator 102 and the sawtooth signal from the sawtooth generator 108 (whose output is dependent on the source voltage and varies with time), and subtracts a fixed value from gain block 104, which is dependent on the source voltage; and applies this sum to one input of comparator 112. This sum is continuously compared with the FLUX from the flux-measurement block 114; and at the instant FLUX is smaller than the sum from the summation circuit 110, the flip-flop 115 is set to close switch $S_1$ in the primary winding, thereby ending Interval II during which excess energy is delivered to the power supply, and starting Interval III during which energy is stored in the transformer. Switch $S_1$ is reopened at the beginning of the next cycle by resetting of flip-flop 115.

## Flux-Measurement Circuit (Fig.14)

Several methods are commonly known for measuring the magnetic flux in the core of a transformer. However, the known methods are generally difficult for pratical implementation in the described system.

Fig. 14 illustrates a flux-measurement system which may be used for block 114 in Fig. 13 for measuring the magnetic flux in the transformer Tr. This system is based on integrating the voltage measured across one of the windings of the transformer, and correcting the integration constant during the part of each cycle when switch $S_1$ is closed, by disabling the integration of the measured voltage and replacing momentarily the integration of the voltage by a known variable related to flux. In the described preferred embodiment, the voltage is measured across winding $N_D$ containing diode $D_1$; and the known variable which is related to flux, and which is momentarily replaced in the integration, is the current flowing through winding $N\rho$. It will be appreciated, however, that the integration can be based on the voltage measured across any winding of the transformer, and that the known variable which is momentarily used in the integration process for correcting the integration constant may be another known variable related to the flux, e.g., current in another winding.

Thus, flux-measurement system illustrated in Fig. 14 includes an auxiliary winding Nd in the circuit including the diode $D_1$, for measuring the voltage across the transformer in order to perform the integration. The circuit in Fig. 14 further includes an inverting integrator, generally designated 120, comprising an amplifier 122, capacitor 124, and resistor 126, for integrating the voltage across the transformer as sensed by winding Nd. Circuit 120 further includes resistors 128 and 130, and switch $S_x$; switch $S_x$ is closed together with switch $S_1$ in the primary winding. The circuit illustrated in Fig. 14 further includes a current measuring circuit 132 for measuring the current in the primary winding of the transformer Tr.

It will be seen that the instantaneous output voltage ($V_{OUT}$) of the integrator circuit 120 is given by the expression:

$$V_{OUT} = -\frac{1}{RC}\, Vdt + Coust = -\frac{Nd}{RC}\, FLUX + Const.$$

When the current starts to flow in the primary winding, switch $S_x$ is closed, and the output voltage is forced to be proportional to the real flux. Thus, the integration circuit 120 integrates the measured voltage with respect to time; but when the primary winding switch $S_1$ is closed, switch $S_x$ is also closed so as to correct the integration constant, by disabling the integration of the measured voltage, and instead forcing the output to track the real current flow, i.e., the output of the current measuring circuit 132.

Regulating the Energy Level (Fig. 15)

In order to reduce the losses in the power circuits, the flux (current levels) should be kept as low as possible. This regulation may be implemented by two methods: one is by mathematically calculating REF-FLUX; and the other is by utilizing an energy dependent feedback system.

Fig. 15 illustrates an energy dependent feedback system. based on a mathematical calculation. For the mathematical calculation approach, the following three cases are distinguished:

(1) non-continuous flux in the transformer;
(2) continuous flux, with partial energy discharge during the respective interval; and
(3) continuous flux combined with flux (and energy) retention during this interval.

The mathematical expression presenting the conditions of case (3) is:

$$REF\text{-}FLUX = k_i\, \frac{(N_sV_i + N_pV_o)}{N_sV_i}\, I_o + k_2\, \frac{N_sV_iV_o}{(N_sV_i + N_pV_o)}$$

wherein:

$V_i$ is the voltage of the voltage source;

$V_o$ is the output voltage;

$I_o$ is the output current;

$N_p$ is the number of turns of the primary winding;

$N_s$ is the number of turns of the secondary winding; and

REF-FLUX is the calculated reference flux.

Fig. 15 illustrates an electrical circuit for measuring the REF-FLUX according to the above mathematical expression.

Thus, the circuit includes two multiplier/ divider circuits 140 and 142, and two summation circuits 144 and 146.

The expression ($k_1I_O$) is inputted into multiplier circuit 140 and is multiplied by the output from summation circuit 144; the latter circuit sums Np multiplied by $V_o$, and $N_s$ multiplied by $V_i$. The product is divided by the quantity $N_s$ times Vi in circuit 140, and the output is applied to summation circuit 146.

The expression ($k_2V_O$) is multiplied by $N_s$ and $V_i$ in circuit 142 and is divided by the output from summation circuit 144; and the result is outputted to the summation circuit 146. Thus, the REF-FLUX output from the latter circuit represents the sums of the outputs of the multiplier/divider circuits 140, 142.

While the invention has been described with respect to several preferred embodiments, it will be appreciated that many other variations, modifications and applications of the invention as defined by the claims may be made. Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

**Claims**

1. An inverter for supplying electrical energy from a DC supply (2) to a load (10), comprising:

a transformer (4) including a primary winding circuit (6) coupled to the DC supply, and a secondary winding circuit (8) coupled to the load;

said primary winding circuit (6) including a first switch (S1) for interrupting the DC supply causing energy to be stored in the transformer;

said secondary winding circuit including at least a second, unidirectional switch (S2, D3) to produce an output of one sign when closed;

said primary winding circuit further including an electrical device (D1) effective to return energy to the DC supply when said first and second switches are open;

and a control circuit (14) for controlling the operation of said first and second switches;

characterized in that said control circuit (14) separately and independently controls the operation of said first and second switches to open and close, at the same frequency, such that during one interval in each cycle the switch in the primary winding circuit is closed to produce a controlled amount of an excess of energy which is stored in said transformer, during a second interval the switch in the secondary winding is closed to deliver energy to the load, and during a third interval in each cycle the switches in the primary winding circuit and the secondary winding circuit are both open and the excess energy stored in the transformer is returned to the DC supply, thereby permitting fast and stable control.

2.  The inverter according to Claim 1, wherein said control circuit (14) includes:

a primary winding control subcircuit (20) effective to sense the energy stored in the transformer and to open said first switch (S1) when the stored energy reaches a predetermined value;

and a secondary winding control subcircuit (30) effective when said second switch (S2) is closed, to sense the output voltage in the secondary winding circuit of the transformer and to open said closed second switch when the output voltage reaches a predetemined value.

3.  The inverter according to Claim 2, wherein said transformer (4) is a flyback transformer in which said primary and secondary winding circuits (6, 8) have polarities such that there is current flow in the secondary winding circuit (8) when no current flows in the primary winding circuit (6), and no current flow in the secondary winding circuit (8) when there is current flow in the primary winding circuit (6); and wherein said secondary winding circuit (8) also includes a third, unidirectional switch (S3) poled in the opposite direction as said second switch (S2), such as to produce, when it is the active switch in the secondary winding circuit instead of said second switch, and is closed, an output of the opposite sign as said second switch.

4.  The inverter according to Claim 2, wherein:

said primary winding control subcircuit (20) closes said first switch (S1) at the beginning of the cycle to start a first interval, and opens said first switch (S1) when the stored energy reaches a predetermined value to end said first interval and to start said second interval;

said secondary winding control subcircuit (30) closes said second switch (S2) at the start of the second interval and opens said second switch (S2) when the output voltage in the secondary winding circuit reaches a predetermined value to end said second interval and to start said third interval during which both said first and second switches are open, which third interval ends by the closing of said first switch at the end of the cycle and starting the first interval of the next cycle.

5.  The inverter according to Claim 2, wherein said primary winding control subcircuit (20) includes:

a flux level reference generator (40) for fixing said predetermined value of stored energy;

a current sensor (21) for sensing the current through said first switch in the primary winding circuit;

a comparator (22) for comparing the latter sensed current with the predetermined value fixed by said flux level reference generator;

and switch actuator means (23) for opening said first switch in the primary winding circuit when the two values compared by said comparator are equal.

6.  The inverter according to Claim 2 wherein:

said primary winding control subcircuit (20) opens said first switch (S1) at the beginning of each cycle and closes said first switch (S1) at a subsequent point in the cycle when, at the end of the respective cycle, the energy stored in the transformer would reach a predetermined value; and

said secondary winding control subcircuit (30) closes said second switch (S2) at the beginning of the respective cycle and opens said second switch (S2) when the voltage at the output of the secondary winding circuit reaches a predetermined value;

such that said first interval is started by the opening of said first switch (S1) and closing of said second switch (S2), during which energy in the transformer is delivered to the load; said second interval is started by the opening of said second switch (S2) during which excess energy in the transformer is returned to the power supply; and said third interval is started by the closing of said first switch (S1) during which energy is stored in the transformer.

7.  The inverter according to Claim 6, wherein said subsequent point in the cycle when said first switch (S1) is closed is determined by circuitry which includes:

first means (102) for generating a first value corresponding to a reference flux;

second means (104) for generating a second value corresponding to the input voltage;

third means (108) for generating a third value corresponding to the input voltage but varying with time;

fourth means (110) for generating a fourth value equal to said first value and said second value minus said third value;

a magnetic flux-measuring circuit (114) for generating a fifth value corresponding to the magnetic flux in the transformer;

and a comparator (112) for closing said first switch when said fifth value is smaller than said fourth value.

8. The inverter according to Claim 7, wherein:

said first means is a first voltage generator (102), serving as a flux-demand estimator generator, for generating a first voltage corresponding to a reference flux;

said second means is a second voltage generator (104) for generating a second voltage corresponding to the voltage across the primary winding;

said third means is a sawtooth signal generator (108) for generating a third voltage varying with time and having an amplitude varying with the voltage across the primary winding;

said fourth means is a summing circuit (110) for summing the above generated voltages;

and said fifth means is a magnetic flux-measuring circuit (114) for measuring the magnetic flux in the transformer and for generating a voltage corresponding thereto;

said comparator comparing the voltage of said magnetic flux-measuring circuit with the voltages summed by said summing circuit and closing said first switch in the primary circuit when the voltage of said magnetic-flux measuring circuit is smaller than the voltages summed by said summing circuit.

9. The inverter according to either of Claims 7 or 8, wherein said magnetic flux-measuring circuit (114) comprises:

voltage measuring means (Nd, Fig. 14) for measuring the voltage across a winding of the transformer;

integrating means (120) for integrating the latter measured voltage with respect to time;

and correction means (132) for correcting the integration constant during a part of each cycle when said first switch is closed, by disabling the integration of the measured voltage by said integrating means.

10. The inverter according to Claim 9, wherein said correction means comprises a current measuring circuit (132) for measuring the current through one of the windings, which measured current is used as said known variable.

**Patentansprüche**

1. Wechselrichter zur Lieferung elektrischer Energie von einem Gleichstromspeiser (2) zu einer Last (10), umfassend:

einen Transformator (4), der einen an den Gleichstromspeiser gekoppelten Primärwicklungsschaltkreis (6) und einen an die Last gekoppelten Sekundärwicklungsschaltkreis (8) umfaßt;

wobei der Primärwicklungsschaftkreis (6) einen ersten Schalter (S1) zum Unterbrechen des Gleichstromspeisers umfaßt, um die Speicherung von Energie im Transformator zu bewirken;

wobei der Sekundärwicklungsschaltkreis (8) mindestens einen zweiten in eine Richtung wirkenden Schalter (S2, D3) umfaßt, um eine Ausgabe mit einem Vorzeichen zu erzeugen, wenn er geschlossen ist;

wobei der Primärwicklungsschaltkreis weiterhin eine elektrische Vorrichtung (D1) umfaßt, die bewirkt, daß Energie zum Gleichstromspeiser zurückgeleitet wird, wenn der erste und zweite Schalter offen sind;

und einen Steuerschaltkreis (14), der den Betrieb des ersten und zweiten Schalters steuert; dadurch gekennzeichnet daß

der Steuerschaltkreis (14) den Betrieb des ersten und zweiten Schalters getrennt und unabhängig steuert, um das gleichfrequentige Öffnen und Schließen zu bewirken, so daß während eines Intervalls in jedem Zyklus der Schalter im Primärwicklungsschaftkreis geschlossen wird, um eine gesteuerte Menge von Überschußenergie zu erzeugen, die im Transformator gespeichert wird, wobei während eines zweiten Intervalls der Schalter in der Sekundärwicklung geschlossen wird, um Energie zur Last zu liefern, und wobei während eines dritten Intervalls in jedem Zyklus die Schalter im Primär- und Sekundärwicklungsschaltkreis beide offen sind und die Überschußenergie, die im Transformator gespeichert ist, zum Gleichstromspeiser zurückgeleitet wird, wodurch eine schnelle und stabile Steuerung erlaubt wird.

2. Der Wechselrichter nach Anspruch 1, wobei der Steuerschaltkreis (14) umfaßt:

einen Primärwicklungshilfsschaltkreis (20), der wirksam ist, um die im Transformator gespeicherte Energie zu erfassen und den offenen ersten Schalter (S1) zu öffnen, wenn die gespeicherte Energie einen vorherbestimmten Wert erreicht;

und einen Sekundärwicklungshilfsschaltkreis (30), der wirksam ist, wenn der zweite Schalter (S2) geschlossen ist, um die Ausgabespannung im Sekundärwicklungsschaltkreis des Transformators zu erfassen und den geschlossenen zweiten Schalter zu öffnen, wenn die Ausgabespannung einen vorherbestimmten Wert erreicht.

3. Der Wechselrichter nach Anspruch 2, wobei der Transformator (4) ein Rücklauftransformator ist, in dem die Primär- und Sekundärschaltkreise (6,8) derartige Polaritäten aufweisen, daß im Sekundärwicklungsschaltkreis (8) Stromfluß besteht, wenn kein Strom in den Primärwicklungsschaltkreis (6) fließt, und kein Strom in den Sekundärwicklungsschaltkreis (8) fließt, wenn Stromfluß im Primärwicklungsschaltkreis (6) besteht; und wobei der Sekundärwicklungsschaltkreis (8) einen dritten in eine Richtung wirkenden Schalter (S3) umfaßt, der in Bezug auf den zweiten Schalter (S2) in entgegengesetzter Richtung gepolt ist, und der derart ausgebildet ist, daß, wenn er im Sekundärwicklungsschaltkreis anstatt des zweiten Schalters der aktive Schalter ist und sich im geschlossen Zustand befindet, eine Ausgabe mit einem entgegengesetzten Zeichen in Bezug auf den zweiten Schalter erzeugt wird.

4. Der Wechselrichter nach Anspruch 2, wobei:
der Primärwicklungshilfsschaltkreis (20) den ersten Schalter (S1) am Anfang des Zyklus schließt, um ein erstes Intervall zu starten, und den ersten Schalter (S1) öffnet, wenn die gespeicherte Energie einen vorherbestimmten Wert erreicht, um das erste Intervall zu beenden und das zweite Intervall zu starten;
der Sekundärwicklungshilfsschaltkreis (30) beim Starten des zweiten Intervalls den zweiten Schalter (S2) schließt und den zweiten Schalter (S2) öffnet, wenn die Ausgabespannung im Sekundärwicklungsschaltkreis einen vorherbestimmten Wert erreicht, um das zweite Intervall zu beenden und um das dritte Intervall zu starten, wobei während dessen der erste und zweite Schalter offen sind, wobei das dritte Intervall durch Schließen des ersten Schalters am Ende des Zyklus und Starten des ersten Intervalls des nächsten Zyklus endet.

5. Der Wechselrichter nach Anspruch 2, wobei der Primärwicklungshilfsschaltkreis (20) umfaßt:
einen Flußpegel-Bezugsgenerator (40), um den vorherbestimmten Wert gespeicherter Energie festzulegen;
einen Strommesser (21), um den Strom durch den ersten Schalter im Primärwicklungsschaltkreis zu erfassen;

einen Komparator (22), um den letztgenannten erfaßten Strom mit dem vorherbestimmten, durch den Flußpegel-Bezugsgenerator festgelegten Wert zu vergleichen;
und eine Schalterbetätigungsvorrichtung (23), um den ersten Schalter im Primärwicklungsschaltkreis zu öffnen, wenn die zwei durch den Komparator verglichenen Werte gleich sind.

6. Der Wechselrichter nach Anspruch 2, wobei:
der Primärwicklungshilfsschaltkreis (20) zu Beginn eines jeden Zyklus den ersten Schalter (S1) öffnet und zu einem nachfolgenden Zeitpunkt im Zyklus den ersten Schalter (S1) schließt, wenn, am Ende des entsprechenden Zyklus, die im Transformator gespeicherte Energie einen vorherbestimmten Wert erreichen würde; und
der Sekundärwicklungshilfsschaltkreis (30) zu Beginn des entsprechenden Zyklus den zweiten Schalter (S2) schließt und den zweiten Schalter (S2) öffnet, wenn die Spannung am Ausgang des Sekundärwicklungsschaltkreises einen vorherbestimmten Wert erreicht;
so daß das erste Intervall durch das Öffnen des ersten Schalters (S1) und Schließen des zweiten Schalters (S2) gestartet wird, währenddessen die Energie im Transformator zur Last zugeführt wird; wobei das zweite Intervall durch das Öffnen des zweiten Schalters (S2) gestartet wird, währenddessen die Überschußenergie im Transformator zum Stromspeiser zurückgegeben wird; und wobei das dritte Intervall durch das Schließen des ersten Schalters (S1) gestartet wird, währenddessen im Transformator Energie gespeichert wird.

7. Der Wechselrichter nach Anspruch 6, wobei der nachfolgende Zeitpunkt im Zyklus, wenn der erste Schalter (S1) geschlossen ist, durch eine Schaltung bestimmt wird, umfassend:
eine erste Vorrichtung (102) zum Erzeugen eines ersten Wertes, der einem Bezugsfluß entspricht;
eine zweite Vorrichtung (104) zum Erzeugen eines zweiten Wertes, der der Eingabespannung entspricht;
eine dritte Vorrichtung (108) zum Erzeugen eines dritten Wertes, der der Eingabespannung entspricht, der sich aber mit der Zeit verändert;
eine vierte Vorrichtung (110) zum Erzeugen eines vierten Wertes, der gleich dem ersten Wert und dem zweiten Wert ist, minus dem dritten Wert;
einen Magnetfluß-Meßschaltkreis (114) zum Erzeugen eines fünften Wertes, der dem Magnetfluß im Transformator entspricht;

und einen Komparator (112) zum Schließen des ersten Schalters, wenn der fünfte Wert niedriger als der vierte Wert ist.

8. Der Wechselrichter nach Anspruch 7, wobei:

die erste Vorrichtung ein erster Spannungsgenerator (102) ist, der als Flußbedarfs-Schätzwertgenerator dient, um eine erste Spannung zu erzeugen, die einem Referenzfluß entspricht;

die zweite Vorrichtung ein zweiter Spannungsgenerator (104) ist, der eine zweite Spannung erzeugt, die der Spannung an der Primärwicklung entspricht;

die dritte Vorrichtung ein Sägezahn-Signalgenerator (108) ist, der eine dritte, sich mit der Zeit veränderlichen Spannung erzeugt und eine Amplitude aufweist, die sich mit der Spannung an der Primärwicklung verändert;

die vierte Vorrichtung ein Summierschaltkreis (110) zum Summieren der oben erzeugten Spannungen ist;

und die fünfte Vorrichtung ein Magnetfluß-Meßschaftkreis (114) ist, der den Magnetfluß im Transformator mißt und eine dazu entsprechende Spannung erzeugt;

der Komparator ausgebildet ist die Spannung des Magnetfluß-Meßschaltkreises mit den vom Summierschaltkreis summierten Spannungswerten zu vergleichen und den ersten Schalter im Primärschaltkreis zu schließen, wenn die Spannung des Magnetfluß-Meßschaltkreises geringer als die vom Summierschaltkreis summierten Spannungswerte ist.

9. Der Wechselrichter nach beiden Ansprüchen 7 und 8, wobei der Magnetfluß-Meßschaltkreis (114) umfaßt:

eine Spannungsmeßvorrichtung (Nd, Fig.14) zum Messen der Spannung an einer Wicklung des Transformators;

eine Integriervorrichtung (120) zum Integrieren der zuletzt gemessenen Spannung in Bezug auf die Zeit;

eine Korrekturvorrichtung (132), die während eines Abschnitts eines jeden Zyklus die Integrationskonstante berichtigt, wenn der erste Schalter geschlossen ist, indem die Integration der gemessenen Spannung durch die Integriervorrichtung unterbrochen wird.

10. Der Wechselrichter nach Anspruch 9, wobei die Korrekturvorrichtung eine Strommeßschaltung (132) zum Messen eines Stromflusses durch eine der Wicklungen umfaßt, wobei der gemessene Stromfluß als die bekannte Variable verwendet wird.

**Revendications**

1. Inverseur pour fournir de l'énergie électrique à partir d'une alimentation en courant continu (2) à une charge (10), comprenant :
   - un transformateur (4) incluant un circuit d'enroulement primaire (6) couplé à l'alimentation en courant continu et un circuit d'enroulement secondaire (8) couplé à la charge ;
   - ledit circuit d'enroulement primaire (6) incluant un premier commutateur (S1) pour interrompre l'alimentation en courant continu ce qui provoque le stockage de l'énergie dans le transformateur ;
   - ledit circuit d'enroulement secondaire incluant au moins un second commutateur unidirectionnel (S2,D3) pour produire une sortie d'un signe quand il est fermé ;
   - ledit circuit d'enroulement primaire comportant de plus un dispositif électrique (D1) destiné à ramener l'énergie à l'alimentation en courant continu quand lesdits premier et second commutateurs sont ouverts ;
   - et un circuit de commande (14) pour commander le fonctionnement desdits premier et second commutateurs ;

caractérisé en ce que ledit circuit de commande (14) commande séparément et indépendamment le fonctionnement desdits premier et second commutateurs pour les ouvrir et les fermer, à la même fréquence, de sorte que, pendant un intervalle dans chaque cycle, le commutateur dans le circuit d'enroulement primaire est fermé pour produire une quantité commandée d'un excès d'énergie qui est stockée dans ledit transformateur, pendant un deuxième intervalle le commutateur dans l'enroulement secondaire est fermé pour délivrer de l'énergie à la charge, et pendant un troisième intervalle dans chaque cycle les commutateurs dans le circuit d'enroulement primaire et le circuit d'enroulement secondaire sont tous les deux ouverts et l'énergie en excès stockée dans le transformateur est ramenée à l'alimentation en courant continu en permettant ainsi une commande rapide et stable.

2. Inverseur selon la revendication 1, dans lequel ledit circuit de commande (14) comporte :
   - un sous-circuit de commande d'enroulement primaire (20) destiné à détecter l'énergie stockée dans le transformateur et à ouvrir ledit premier commutateur (S1) quand l'énergie stockée atteint une valeur prédéterminée ; et
   - un sous-circuit de commande d'enroulement secondaire (30) destiné quand ledit second commutateur (S2) est fermé à détecter la tension de sortie dans le circuit d'enroulement secondaire du transformateur et à ouvrir ledit second commutateur fermé quand la tension de sortie atteint une valeur prédéterminée.

3. Inverseur selon la revendication 2, dans lequel ledit transformateur (4) est un transformateur retour dans lequel lesdits circuits d'enroulement primaire et secondaire (6,8) présentent des polarités telles qu'il existe un flux de courant dans le circuit d'enroulement secondaire (8) quand aucun courant ne circule dans le circuit d'enroulement primaire (6) et aucun flux de courant dans le circuit d'enroulement secondaire (8) quand il existe un flux de courant dans le circuit d'enroulement primaire (6), et dans lequel ledit circuit d'enroulement secondaire (8) inclut également un troisième commutateur unidirectionnel (S3) présentant une polarité opposée audit second commutateur (S2) de façon à produire, quand il est le commutateur actif dans le circuit d'enroulement secondaire à la place dudit second commutateur et qu'il est fermé, une sortie du signe opposé par rapport audit second commutateur.

4. Inverseur selon la revendication 2, dans lequel :
   - ledit sous-circuit de commande d'enroulement primaire (20) ferme ledit premier commutateur (S1) au début du cycle pour démarrer un premier intervalle et ouvre ledit premier commutateur (S1) quand l'énergie stockée atteint une valeur prédéterminée pour achever ledit premier intervalle et pour démarrer ledit deuxième intervalle ;
   - ledit sous-circuit de commande d'enroulement secondaire (30) ferme ledit deuxième commutateur (S2) au début du deuxième intervalle et ouvre ledit second commutateur (S2) quand la tension de sortie dans le circuit d'enroulement secondaire atteint une valeur prédéterminée pour achever ledit deuxième intervalle et démarrer ledit troisième intervalle pendant lequel à la fois les premier et second commutateurs sont ouverts, lequel troisième intervalle s'achève par la fermeture dudit premier commutateur à la fin du cycle et le démarrage du premier intervalle du cycle suivant.

5. Inverseur selon la revendication 2, dans lequel ledit sous-circuit de commande d'enroulement primaire (20) inclut :
   - un générateur de référence de niveau de flux (40) pour fixer ladite valeur prédéterminée d'énergie stockée ;
   - un capteur de courant (21) pour détecter le courant à travers ledit premier commutateur dans le circuit d'enroulement primaire ;
   - un comparateur (22) pour comparer le dernier courant détecté avec la valeur prédéterminée fixée par ledit générateur de référence de niveau de flux ; et
   - des moyens d'actionnement de commutateur (23) pour ouvrir ledit premier commutateur dans le circuit d'enroulement primaire quand les deux valeurs comparées par ledit comparateur sont égales.

6. Inverseur selon la revendication 2, dans lequel :
   - ledit sous-circuit de commande d'enroulement primaire (20) ouvre ledit premier commutateur (S1) au début de chaque cycle et ferme ledit premier commutateur (S1) en un point suivant du cycle quand, à la fin du cycle respectif, l'énergie stockée dans le transformateur atteint une valeur prédéterminée ; et
   - ledit sous-circuit de commande d'enroulement secondaire (30) ferme ledit second commutateur (S2) au début du cycle respectif et ouvre ledit second commutateur (S2) quand la tension à la sortie du circuit d'enroulement secondaire atteint une valeur prédéterminée ;
de sorte que ledit premier intervalle est démarré par l'ouverture dudit premier commutateur (S1) et la fermeture dudit second commutateur (S2), pendant lequel l'énergie dans le transformateur est délivrée à la charge ; ledit deuxième intervalle est démarré par l'ouverture dudit second commutateur (S2), pendant lequel l'énergie en excès dans le transformateur est ramenée à l'alimentation en puissance ; et ledit troisième intervalle est démarré par la fermeture dudit premier commutateur (S1), pendant lequel de l'énergie est stockée dans le transformateur.

7. Inverseur selon la revendication 6, dans lequel ledit point suivant dans le cycle quand ledit premier commutateur (S1) est fermé est déterminé par un montage qui comporte :
   - des premiers moyens (102) pour engendrer une première valeur correspondant à un flux de référence ;
   - des seconds moyens (104) pour engendrer une deuxième valeur correspondant à la tension d'entrée ;
   - des troisièmes moyens (108) pour engendrer une troisième valeur correspondant à la tension d'entrée mais variant dans le temps ;
   - des quatrièmes moyens (110) pour engendrer une quatrième valeur égale à ladite première valeur et à ladite deuxième valeur moins ladite troisième valeur ;

- un circuit de mesure de flux magnétique (114) pour engendrer une cinquième valeur correspondant au flux magnétique dans le transformateur ; et
- un comparateur (112) pour fermer ledit premier commutateur quand ladite cinquième valeur est plus petite que ladite quatrième valeur.

8. Inverseur selon la revendication 7, dans lequel :

- lesdits premiers moyens sont un premier générateur de tension (102) servant de générateur d'estimation de demande de flux pour engendrer une première tension correspondant à un flux de référence ;
- lesdits seconds moyens sont un second générateur de tension (104) pour engendrer une seconde tension correspondant à la tension à travers l'enroulement primaire ;
- lesdits troisièmes moyens sont un générateur de signaux en dents de scie (108) pour engendrer une troisième tension variant dans le temps et ayant une amplitude variant avec la tension à travers l'enroulement primaire ;
- lesdits quatrièmes moyens sont un circuit de sommation (110) pour sommer les tensions engendrées ci-dessus ; et
- lesdits cinquièmes moyens sont un circuit de mesure de flux magnétique (114) pour mesurer le flux magnétique dans le transformateur et pour engendrer une tension correspondant à celui-ci ;
- ledit commutateur comparant la tension dudit circuit de mesure de flux magnétique avec les tensions sommées par ledit circuit de sommation et fermant ledit premier commutateur dans le circuit primaire quand la tension dudit circuit de mesure de flux magnétique est plus petite que les tensions sommées par ledit circuit de sommation.

9. Inverseur selon l'une des revendications 7 ou 8, dans lequel ledit circuit de mesure de flux magnétique (114) comprend :

- des moyens de mesure de tension (Nd, figure 14) pour mesurer la tension à travers un enroulement du transformateur ;
- des moyens intégrateurs (120) pour intégrer la dernière tension mesurée par rapport au temps ; et
- des moyens de correction (132) pour corriger la constante d'intégration pendant une partie de chaque cycle quand ledit premier commutateur est fermé, en interrompant l'intégration de la tension mesurée par lesdits moyens intégrateurs.

10. Inverseur selon la revendication 9, dans lequel lesdits moyens de correction comprennent un circuit de mesure de courant (132) pour mesurer le courant à travers un des enroulements, lequel courant mesuré est utilisé comme ladite variable connue.

FIG. 1

DC SUPPLY 2

PRIMARY SWITCHING CIRCUIT 6

ISOLATION TRANSFORMER 4

SECONDARY SWITCHING CIRCUIT 8

CONTROL UNIT 14

OUTPUT FILTER 12

LOAD 10

FIG. 2

DC+
DC−

2

D1
S1
N1
N2

CONTROL UNIT 14

N3
N4
D3
D4
S2
S3

6

8

16

OUTPUT

EP 0 434 889 B1

FIG. 2A

FIG. 3- MAGNETIC FLUX DIAGRAM (TYPICAL)

FIG. 5

CURRENT SENSOR 21

FLUX LEVEL REFERENCE 40

START CYCLE

FLIP FLOP 23

COMPARATOR 22

TO SWITCH S1

20

FIG. 4  CONTROL UNIT 14

DC SOURCE VOLTAGE

S1 SWITCHING PULSES

14

PRIMARY CONTROL (FIG. 5) 20

FLUX LEVEL GENERATOR (FIG. 7) 40

REFERENCE VOLTAGE GENERATOR 50

SECONDARY CONTROL (FIG. 6) 30

S2
S3

OUTPUT VOLTAGE
OUTPUT CURRENT

FIG. 6

FIG. 8a

DC+
DC−
S1A
D1A
S1B
D1B

FIG. 8b

S3B
S2A
S2B
S3A
16

FIG. 8c

D3
D2
S3
S2
16

FIG. 7

REFERENCE VOLTAGE GENERATOR — 50

ABS. VALUE — 43

| Vref |

ABS VALUE — 41

| vout |

INTERVAL III.

A
B
— 42

45

44

46

FLUX REFERENCE — 48

40

V−OUT

OUTPUT FILTER

LOAD

FIG. 9- UPS SYSTEM

FIG. 10- UPS SYSTEM

EP 0 434 889 B1

21

FIG. 11

## FIG. 12   MAGNETIC FLUX DIAGRAM (PREFERED)

FLUX LEVEL

| | SECONDARY PORTION | GAP | PRIMARY PORTION |
|---|---|---|---|
| | I | II | III |
| | S1 OPEN S2 OR S3 CLOSED | S1,S2,S3 OPEN | S1 CLOSED S2,S3,OPEN |
| | | DIODE MAY CONDUCT | |

DIODE MAY CONDUCT

—— 1 CYCLE ——

## FIG. 13   PRIMARY CURRENT CONTROL

## FIG. 14   FLUX MEASURMENT SYSTEM

## FIG. 15   FLUX DEMAND ESTIMATOR - MATHEMATICAL ALGORITHM